# EUROPEAN PATENT SPECIFICATION

(11) **EP 3 449 024 B1**
(45) Date of publication and mention of the grant of the patent: **30.12.2020**
(21) Application number: 17790206.1
(22) Date of filing: 24.04.2017
(51) Int. Cl.: C22C 14/00, B22F 3/105, B33Y 70/00, C22C 1/04, C22F 1/00, C22F 1/18, B33Y 10/00

(54) **BCC MATERIALS OF TITANIUM, ALUMINUM, NIOBIUM, VANADIUM, AND MOLYBDENUM, AND ADDITIVE MANUFACTURING METHOD USING SAID MATERIALS**
BCC-MATERIALIEN AUS TITAN, ALUMINIUM, NIOB, VANADIUM UND MOLYBDÄN SOWIE VERFAHREN ZUR ADDITIVEN HERSTELLUNG UNTER VERWENDUNG SOLCHER MATERIALIEN
MATÉRIAUX BCC EN TITANE, ALUMINIUM, NIOBIUM, VANADIUM ET MOLYBDÈNE, ET MÉTHODE DE FABRICATION ADDITIVE UTILISANT LESDITS MATÉRIAUX

(30) Priority: 25.04.2016 US 201662327244 P
(43) Date of publication of application: 06.03.2019
(73) Proprietor: Howmet Aerospace Inc., Pittsburgh, PA 15212-5858 (US)
(72) Inventor: LIN, Jen C., Export, Pennsylvania 15632 (US); YAN, Xinyan, Murrysville, Pennsylvania 15668 (US); SABOL, Joseph C., Aspinwall, Pennsylvania 15215 (US); HEARD, David W., Pittsburgh, Pennsylvania 15218 (US); ZARANDI, Faramarz MH, Pittsburgh, Pennsylvania 15224 (US); SUN, Fusheng, Canfield, Ohio 44406 (US); CRIST, Ernest, M., Jr., Transfer, Pennsylvania 16154 (US); TAMIRISAKANDALA, Sesh A., Solon, Ohio 44139 (US)
(74) Representative: Forresters IP LLP
(86) International application number: PCT/US2017/029208
(87) International publication number: WO 2017/189459

(56) References cited:
- CN-A- 101 503 771
- JP-A- 2001 348 635
- JP-A- 2006 111 934
- SU-A1- 560 721
- US-A1- 2010 180 991
- US-A1- 2014 053 956
- US-A1- 2014 338 795
- US-A1- 2016 082 547
- DAVIS J R: "Metals Handbook - Desk Edition, PASSAGE", METALS HANDBOOK: DESK EDITION, XX, XX, 1 January 1998 (1998-01-01), pages 576-577, 585, XP002272447,

## Description

### BACKGROUND

Titanium alloys are known for their low density (60% of that of steel) and their high strength. Additionally, titanium alloys may have good corrosion resistant properties. Pure titanium has an alpha (hcp) crystalline structure.

### SUMMARY OF THE DISCLOSURE

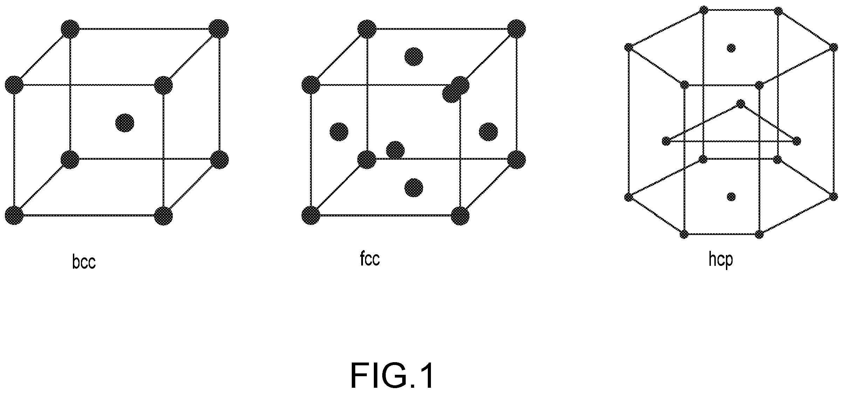

Broadly, the present patent application relates to new bcc (beta) materials (e.g., alloys) made from titanium, aluminum, niobium, vanadium, and molybdenum, optionally with chromium, having a single phase field of a body-centered cubic (bcc) solid solution structure immediately below the solidus temperature of the material ("the new materials"). Examples of beta titanium alloys are disclosed in SU560721 A1, US2010180991 A1, CN101503771 A and DAVIS J R: Metals Handbook - Desk Edition, 1998, pages 576-577. As known to those skilled in the art, and as shown in FIG. 1, a body-centered cubic (bcc) unit cell has atoms at each of the eight corners of a cube plus one atom in the center of the cube. Each of the corner atoms is the corner of another cube so the corner atoms are shared among eight unit cells. Due to the unique compositions described herein, the new materials may realize a single phase field of a bcc solid solution structure immediately below the solidus temperature of the material. The new materials may also have a high liquidus point and a narrow equilibrium freezing range (e.g., for restricting microsegregation during solidification), making them suitable for production through conventional ingot processing, as well as powder metallurgy, shape casting, additive manufacturing, and combinations thereof (hybrid processing).

The invention provides a titanium alloy according to claim 1. The titanium alloy includes a sufficient amount of the titanium, aluminum, niobium, vanadium, molybdenum, and the optional chromium to realize the bcc crystalline structure. Some small fraction of alpha phase (hcp) may be present through a solid-state transformation at a low temperature in the alloy. The below table provides some non-limiting examples of useful new alloy materials.

**Table 1 - Example Titanium Alloys**

| ***Ex. Alloy*** | ***Al* (*wt. %)*** | ***Nb* (*wt. %)*** | ***V (wt. %)*** | ***Mo (wt. %)*** | ***Cr (optional) (wt. %)*** | ***Balance*** |
|---|---|---|---|---|---|---|
| Alloy 1 | 4.0 - 8.0 | 4.0 - 8.0 | 4.0 - 8.0 | 1.0 - 5.0 | 2.0 - 6.0 | Ti, any incidental elements and impurities |
| Alloy 2 | 4.5 - 7.5 | 4.5 - 7.5 | 4.5 - 7.5 | 1.5 - 4.5 | 2.5 - 5.5 | Ti, any incidental elements and impurities |
| Alloy 3 | 5.0 - 7.0 | 5.0 - 7.0 | 5.0 - 7.0 | 2.0 - 4.0 | 3.0 - 5.0 | Ti, any incidental elements and impurities |

As used herein, "alloying elements" means the elements of aluminum, niobium, vanadium, molybdenum, chromium (when used), and titanium of the alloy, and within the compositional limits defined herein. As used herein, "incidental elements" includes grain boundary modifiers, casting aids, and/or grain structure control materials, and the like, that may be used in the alloy, such as silicon, iron, yttrium, erbium, carbon, oxygen, and boron, among others. Such materials may have a low beta transus temperature, resulting in a stable solid solution strengthened matrix. In one embodiment, the beta transus temperature of the new alloys is not greater than 850°C. According to the invention, the materials may optionally include a sufficient amount of one or more of the following elements to induce additional precipitates at elevated temperatures:
- Si: up to 1 wt. %
- Fe: up to 2 wt. %
- Y: up to 1 wt.
- Er: up to 1 wt. %
- C: up to 0.5 wt. %
- O: up to 0.5 wt. %
- B: up to 0.5 wt. %
While the amount of such optional additional element(s) in the material should be sufficient to induce the production of strengthening precipitates, the amount of such optional additional element(s) should also be restricted to avoid primary phase particles.

As noted above, the new materials may have a beta (β) transus temperature not greater than 850 °C. Tables 1-2 provide some non-limiting examples of liquidus, solidus, equilibrium freezing range, non-equilibrium freezing range, beta transus, solvus, precipitate phase and density for two invention alloys. One non-invention alloy (Ti-6Al-4V) is included for comparison purposes.

As shown, the beta (β) transus temperature of the two invention alloys is below 850°C, whereas the prior art Ti-6Al-4V alloy has a beta (β) transus temperature of 995°C. The two invention alloys also show reasonable equilibrium and non-equilibrium freezing ranges for minimizing hot cracking and microsegregation during manufacturing.

**Table 1 - Additional Example Alloys (Calculated)**

| **Alloy** | **Approx. Liquidus (°C)** | **Approx. Solidus (°C)** | **Approx. Equil. Freezing Range (°C)** | **Approx. Non-Equil. Freezing Range (°C)** | **Matrix Phase** |
|---|---|---|---|---|---|
| Ti-6Al-6Nb-6V-3Mo | 1657 | 1636 | 21 | 72 | Beta+alpha |
| Ti-6Al-6Nb-6V-3Mo-4Cr | 1667 | 1646 | 21 | 72 | Beta+alpha |
| Ti-6Al-4V (Prior art) | 1648 | 1631 | 17 | 66 | Beta+alpha |

**Table 2 - Additional Example Alloys (cont.)**

| **Alloy** | **Approx Beta transus (°C)** | **Precipitate Phase** | **Approx. Solvus (°C)** | **Density (g/cm³)** |
|---|---|---|---|---|
| Ti-6Al-6Nb-6V-3Mo | 841 | Ti₃Al (α2) | 702 | 4.60 |
| Ti-6Al-6Nb-6V-3Mo-4Cr | 758 | Ti₃Al (α2) | 784 | 4.67 |
| Ti-6Al-4V (Prior art) | 995 | Ti₃Al (α2) | 551 | 4.41 |

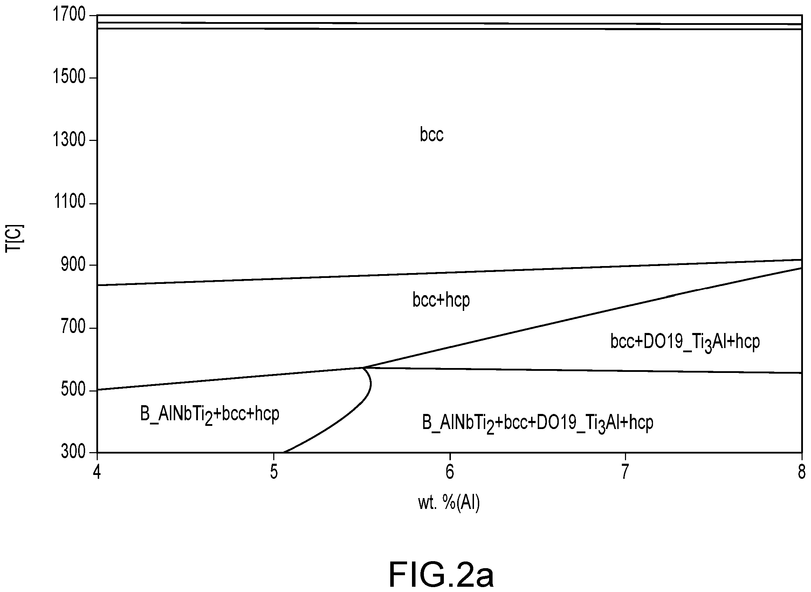

FIG. 2a shows the equilibrium phase fields of a Ti-3Mo-6Nb-6V-XAl alloy. The freezing range of the alloy is not affected by the A1 content. The stability of hcp (α) increases with increasing Al content. However, the stability of Ti₃Al (α2) also increases with increasing Al content. The increased amount of Ti₃Al (α2) might degrade the ductility of the alloy. In one embodiment, an alloy include at least 4.5 wt. % Al. In another embodiment, an alloy includes at least 5.0 wt. % Al. In one embodiment, an alloy includes not greater than 7.5 wt. % Al. In another embodiment, an alloy includes not greater than 7.0 wt. % Al. In one approach, an alloy includes 5 - 7 wt. % Al.

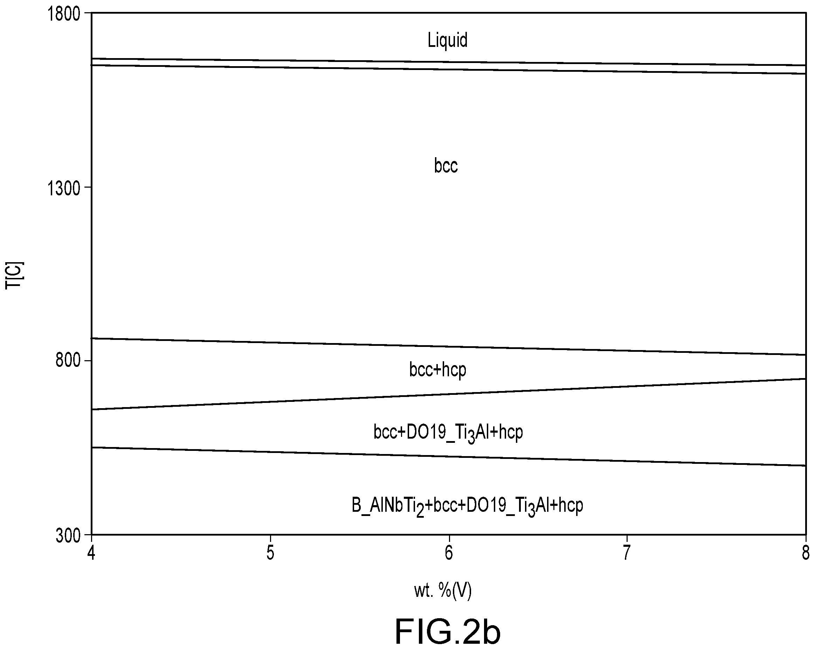

FIG. 2b shows the equilibrium phase fields of a Ti-6Al-3Mo-6Nb-XV alloy. The freezing range of the alloy is not affected by the V content. The stability of beta (β) increases with increasing V content. However, the stability of Ti₃Al (α2) also increases with increasing V content. The increased amount of Ti₃Al (α2) might degrade the ductility of the alloy. In one embodiment, an alloy include at least 4.5 wt. % V. In another embodiment, an alloy includes at least 5.0 wt. % V. In one embodiment, an alloy includes not greater than 7.5 wt. % V. In another embodiment, an alloy includes not greater than 7.0 wt. % V. In one approach, an alloy includes 5 - 7 wt. % V.

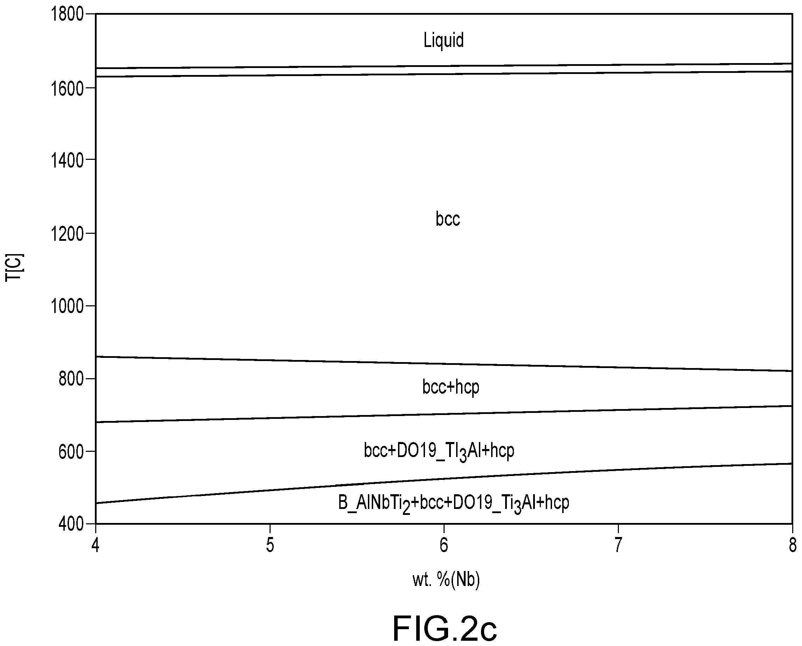

FIG. 2c shows the equilibrium phase fields of a Ti-6Al-3Mo-6V-XNb alloy. Niobium has a similar effect to vanadium on the phase stability of beta (β) and Ti₃Al (α2). In one embodiment, an alloy include at least 4.5 wt. % Nb. In another embodiment, an alloy includes at least 5.0 wt. % Nb. In one embodiment, an alloy includes not greater than 7.5 wt. % Nb. In another embodiment, an alloy includes not greater than 7.0 wt. % Nb. In one approach, an alloy includes 5 - 7 wt. % Nb.

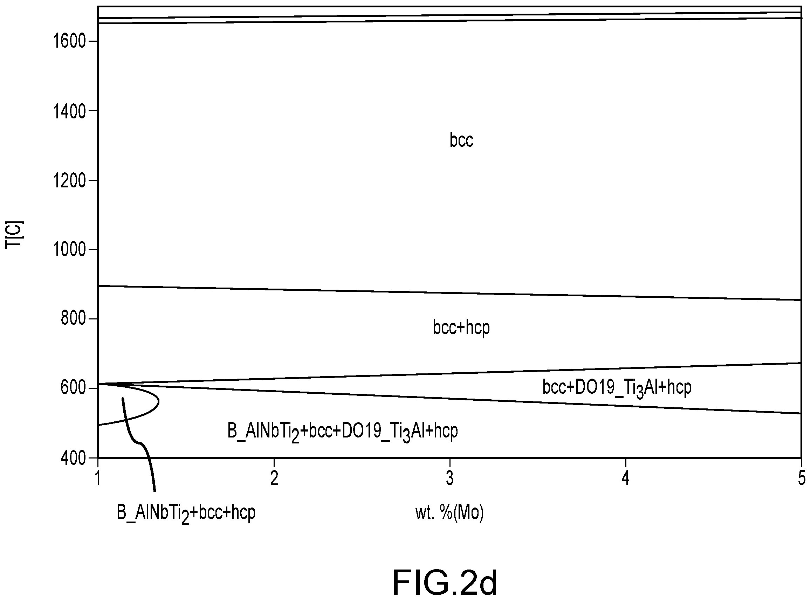

FIG. 2d shows the equilibrium phase fields of a Ti-6Al-6V-6Nb-XMo alloy. The effect of Mo content on the phase stability of beta (β) and Ti₃Al (α2) is similar to that of V and Nb. In one embodiment, an alloy include at least 1.5 wt. % Mo. In another embodiment, an alloy includes at least 2.0 wt. % Mo. In one embodiment, an alloy includes not greater than 4.5 wt. % Mo. In another embodiment, an alloy includes not greater than 4.0 wt. % Mo. In one embodiment, an alloy includes 2 - 4 wt. % Mo.

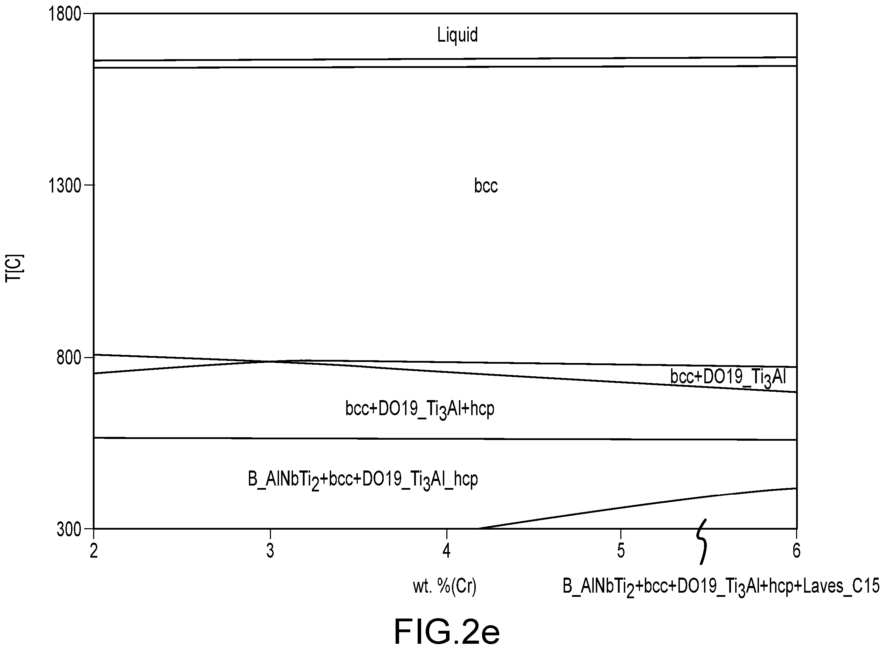

FIG. 2e shows the equilibrium phase fields of a Ti-6Al-6V-6Nb-3Mo-XCr alloy. The addition of chromium continues stabilizing the beta (β) phase, i.e. facilitates a lower beta transus temperature. It is also noted that both Ti₃Al (α2) and hcp (α) phases are destabilized with increasing chromium content for a chromium content of greater than about 3 wt. % Cr. In one embodiment, an alloy include at least 2.5 wt. % Cr. In another embodiment, an alloy includes at least 3.0 wt. % Cr. In one embodiment, an alloy includes not greater than 5.5 wt. % Cr. In another embodiment, an alloy includes not greater than 5.0 wt. % Cr. In one embodiment, the titanium alloy comprises 3 - 5 wt. % Cr.

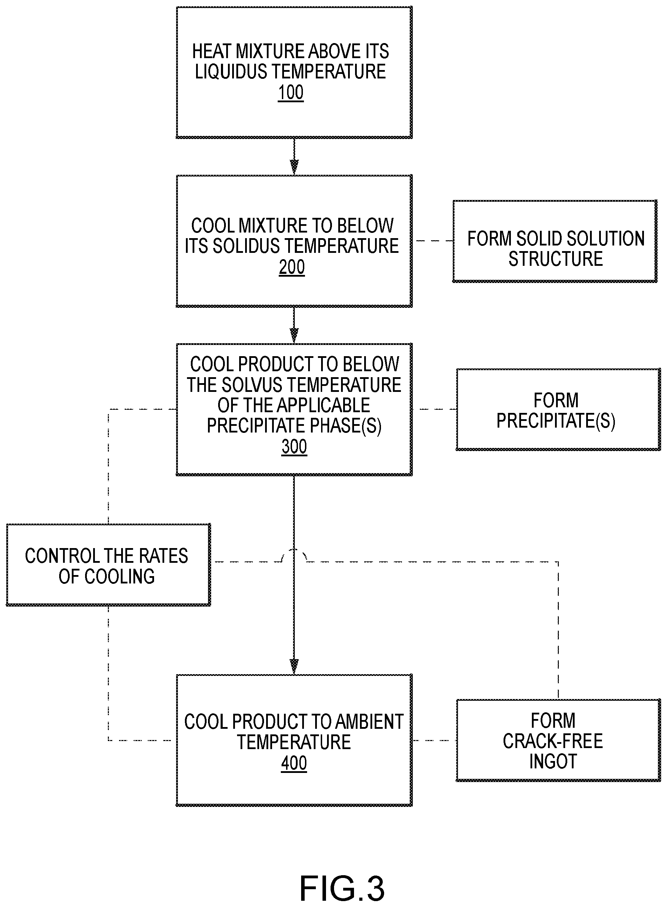

In one approach, and referring now to FIG. 3, a method of producing a new material includes the steps of (100) heating a mixture comprising Ti, Al, V, Nb, Mo, optionally with Cr, and within the scope of the compositions described above, above a liquidus temperature of the mixture, thereby forming a liquid, (200) cooling the mixture from above the liquidus temperature to below the solidus temperature, wherein, due to the cooling, the mixture forms a solid product having a bcc (body-centered cubic) solid solution structure (potentially with other phases due to microsegregation), and wherein the mixture comprises a sufficient amount of the Ti, the Al, the V, the Nb, and the Mo, optionally with the Cr, to realize the bcc solid solution structure, and (300) cooling the solid product to below a solvus temperature of precipitate phase(s) of the mixture, thereby forming one or more precipitate phases within the bcc solid solution structure of the solid product, wherein the mixture comprises a sufficient amount of the Ti, the Al, the V, the Nb, and the Mo, optionally with the Cr, to realize the precipitate phase(s) within the bcc solid solution structure. In one embodiment, the bcc solid solution is the first phase to form from the liquid.

In one embodiment, controlled cooling of the material is employed to facilitate realization of an appropriate end product. For instance, a method may include the step of (400) cooling the mixture to ambient temperature, and a method may include controlling rates of cooling during at least cooling steps (300) and (400) such that, upon conclusion of step (400), i.e., upon reaching ambient temperature, a crack-free ingot is realized. Controlled cooling may be accomplished by, for instance, using an appropriate water cooled casting mold.

As used herein, "ingot" means a cast product of any shape. The term "ingot" includes billet. As used herein, "crack-free ingot" means an ingot that is sufficiently free of cracks such that it can be used as a fabricating ingot. As used herein, "fabricating ingot" means an ingot suitable for subsequent working into a final product. The subsequent working may include, for instance, hot working and/or cold working via any of rolling, forging, extrusion, as well as stress relief by compression and/or stretching.

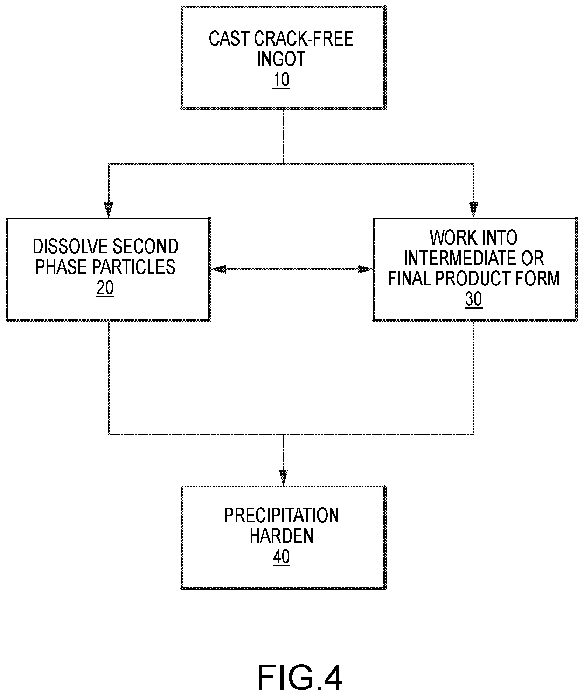

In one embodiment, a crack-free product, such as a crack-free ingot, may be processed, as appropriate, to obtain a final wrought product from the material. For instance, and referring now to FIGS. 3-4, steps (100) - (400) of FIG. 3, described above, may be considered a casting step (10), shown in FIG. 4, resulting in the above-described crack-free ingot. In other embodiments, the crack-free product may be a crack-free preform produced by, for instance, shape casting, additive manufacturing or powder metallurgy. In any event, the crack-free product may be further processed to obtain a wrought final product having the bcc solid solution structure, optionally with one or more of the precipitate phase(s) therein. This further processing may include any combination of dissolving (20) and working (30) steps, described below, as appropriate to achieve the final product form. Once the final product form is realized, the material may be precipitation hardened (40) to develop strengthening precipitates. The final product form may be a rolled product, an extruded product or a forged product, for instance.

With continued reference to FIG. 4, as a result of the casting step (10), the ingot may include some second phase particles. The method may therefore include one or more dissolving steps (20), where the ingot, an intermediate product form and/or the final product form are heated above the solvus temperature of the applicable precipitate(s) but below the solidus temperature of the material, thereby dissolving some of or all of the second phase particles. The dissolving step (20) may include soaking the material for a time sufficient to dissolve the applicable second phase particles. After the soak, the material may be cooled to ambient temperature for subsequent working. Alternatively, after the soak, the material may be immediately hot worked via the working step (30).

The working step (30) generally involves hot working and/or cold working the ingot and/or an intermediate product form. The hot working and/or cold working may include rolling, extrusion or forging of the material, for instance. The working (30) may occur before and/or after any dissolving step (20). For instance, after the conclusion of a dissolving step (20), the material may be allowed to cool to ambient temperature, and then reheated to an appropriate temperature for hot working. Alternatively, the material may be cold worked at around ambient temperatures. In some embodiments, the material may be hot worked, cooled to ambient, and then cold worked. In yet other embodiments, the hot working may commence after a soak of a dissolving step (20) so that reheating of the product is not required for hot working.

The working step (30) may result in precipitation of second phase particles. In this regard, any number of post-working dissolving steps (20) can be utilized, as appropriate, to dissolve some of or all of the second phase particles that may have formed due to the working step (30).

After any appropriate dissolving (20) and working (30) steps, the final product form may be precipitation hardened (40). The precipitation hardening (40) may include heating the final product form to above the applicable solvus temperature(s) for a time sufficient to dissolve at least some second phase particles precipitated due to the working, and then rapidly cooling the final product form to below the applicable solvus temperature(s) thereby forming precipitate particles. The precipitation hardening (40) will further include holding the product at the target temperature for a time sufficient to form strengthening precipitates, and then cooling the product to ambient temperature, thereby realizing a final heat treated product having strengthening precipitates therein. In one embodiment, the final heat treated product contains ≥ 0.5 vol. % of the strengthening precipitates. The strengthening precipitates are preferably located within the matrix of the bcc solid solution structure, thereby conferring strength to the product through interactions with dislocations.

Due to the structure and composition of the new materials, the new materials may realize an improved combination of properties, such as an improved combination of at least two of density, ductility, strength, and fracture toughness, among others. Thus, the new materials may find use in various applications, such as use in low temperature applications (e.g., low temperature vehicle application, such as for an automotive or aerospace component).

The new materials described above can also be used to produce shape cast products or preforms. Shape cast products are those products that achieve their final or near final product form after the casting process. The new materials may be shape cast into any desired shape. In one embodiment, the new materials are shape cast into an automotive or aerospace component (e.g., shape cast into an engine component). After casting, the shape cast product may be subject to any appropriate dissolving (20) or precipitation hardening (40) steps, as described above. In one embodiment, a shape cast product consists essentially of the Ti, the Al, the V, the Nb, and the Mo, optionally with the Cr, and within the scope of the compositions described above. In one embodiment, the shape cast product includes ≥ 0.5 vol. % of strengthening precipitates.

While this patent application has generally been described as relating to bcc matrix alloy materials having one or more of the above enumerated precipitate phase(s) therein, it is to be appreciated that other hardening phases may be applicable to the new bcc matrix alloy materials, and all such hardening phases (coherent or incoherent) may find utility in the bcc alloy materials described herein.

### Additive Manufacturing of New Materials

The invention provides a method according to claim 13 for the additive manufacture of a product. As used herein, "additive manufacturing" means, "a process of joining materials to make objects from 3D model data, usually layer upon layer, as opposed to subtractive manufacturing methodologies", as defined in ASTM F2792-12a entitled "Standard Terminology for Additively Manufacturing Technologies". The new materials may be manufactured via any appropriate additive manufacturing technique described in this ASTM standard, such as binder jetting, directed energy deposition, material extrusion, material jetting, powder bed fusion, or sheet lamination, among others.

In one embodiment, an additive manufacturing process includes depositing successive layers of one or more powders and then selectively melting and/or sintering the powders to create, layer-by-layer, an additively manufactured body (product). In one embodiment, an additive manufacturing processes uses one or more of Selective Laser Sintering (SLS), Selective Laser Melting (SLM), and Electron Beam Melting (EBM), among others. In one embodiment, an additive manufacturing process uses an EOSINT M 280 Direct Metal Laser Sintering (DMLS) additive manufacturing system, or comparable system, available from EOS GmbH (Robert-Stirling-Ring 1, 82152 Krailling/Munich, Germany).

As one example, a feedstock, such as a powder or wire, comprising (or consisting essentially of) the alloying elements and any optional incidental elements, and within the scope of the compositions described above, may be used in an additive manufacturing apparatus to produce an additively manufactured body comprising a bcc solid solution structure, optionally with precipitate phase(s) therein. In some embodiments, the additively manufactured body is a crack-free preform. The powders may be selectively heated above the liquidus temperature of the material, thereby forming a molten pool having the alloying elements and any optional incidental elements, followed by rapid solidification of the molten pool.

As noted above, additive manufacturing may be used to create, layer-by-layer, a metal product (e.g., an alloy product), such as via a metal powder bed. In one embodiment, a metal powder bed is used to create a product (e.g., a tailored alloy product). As used herein a "metal powder bed" and the like means a bed comprising a metal powder. During additive manufacturing, particles of the same or different compositions may melt (e.g., rapidly melt) and then solidify (e.g., in the absence of homogenous mixing). Thus, products having a homogenous or non-homogeneous microstructure may be produced. One embodiment of a method of making an additively manufactured body may include (a) dispersing a powder comprising the alloying elements and any optional incidental elements, (b) selectively heating a portion of the powder (e.g., via a laser) to a temperature above the liquidus temperature of the particular body to be formed, (c) forming a molten pool having the alloying elements and any optional incidental elements, and (d) cooling the molten pool at a cooling rate of at least 1000°C per second. In one embodiment, the cooling rate is at least 10,000°C per second. In another embodiment, the cooling rate is at least 100,000°C per second. In another embodiment, the cooling rate is at least 1,000,000°C per second. Steps (a)-(d) may be repeated as necessary until the body is completed, i.e., until the final additively manufactured body is formed / completed. The final additively manufactured body comprising the bcc solid solution structure, optionally with the precipitate phase(s) therein, may be of a complex geometry, or may be of a simple geometry (e.g., in the form of a sheet or plate). After or during production, an additively manufactured product may be deformed (e.g., by one or more of rolling, extruding, forging, stretching, compressing).

The powders used to additively manufacture a new material may be produced by atomizing a material (e.g., an ingot or melt) of the new material into powders of the appropriate dimensions relative to the additive manufacturing process to be used. As used herein, "powder" means a material comprising a plurality of particles. Powders may be used in a powder bed to produce a tailored alloy product via additive manufacturing. In one embodiment, the same general powder is used throughout the additive manufacturing process to produce a metal product. For instance, the final tailored metal product may comprise a single region / matrix produced by using generally the same metal powder during the additive manufacturing process. The final tailored metal product may alternatively comprise at least two separately produced distinct regions. In one embodiment, different metal powder bed types may be used to produce a metal product. For instance, a first metal powder bed may comprise a first metal powder and a second metal powder bed may comprise a second metal powder, different than the first metal powder. The first metal powder bed may be used to produce a first layer or portion of the alloy product, and the second metal powder bed may be used to produce a second layer or portion of the alloy product. As used herein, a "particle" means a minute fragment of matter having a size suitable for use in the powder of the powder bed (e.g., a size of from 5 microns to 100 microns). Particles may be produced, for example, via atomization.

The additively manufactured body may be subject to any appropriate dissolving (20), working (30) and/or precipitation hardening steps (40), as described above. If employed, the dissolving (20) and/or the working (30) steps may be conducted on an intermediate form of the additively manufactured body and/or may be conducted on a final form of the additively manufactured body. If employed, the precipitation hardening step (40) is generally conducted relative to the final form of the additively manufactured body. In one embodiment, an additively manufactured body consists essentially of the alloying elements and any incidental elements and impurities, such as any of the material compositions described above, optionally with ≥ 0.5 vol. % of precipitate phase(s) therein.

In another embodiment, the new material is a preform for subsequent working. A preform may be an ingot, a shape casting, an additively manufactured product, or a powder metallurgy product. In one embodiment, a preform is of a shape that is close to the final desired shape of the final product, but the preform is designed to allow for subsequent working to achieve the final product shape. Thus, the preform may be worked (30) such as by forging, rolling, or extrusion to produce an intermediate product or a final product, which intermediate or final product may be subject to any further appropriate dissolving (20), working (30) and/or precipitation hardening steps (40), as described above, to achieve the final product. In one embodiment, the working comprises hot isostatic pressing (hipping) to compress the part. In one embodiment, an alloy preform may be compressed and porosity may be reduced. In one embodiment, the hipping temperature is maintained below the incipient melting point of the alloy preform. In one embodiment, the preform may be a near net shape product.

In one approach, electron beam (EB) or plasma arc techniques are utilized to produce at least a portion of the additively manufactured body. Electron beam techniques may facilitate production of larger parts than readily produced via laser additive manufacturing techniques. In one embodiment, a method comprises feeding a small diameter wire (e.g., ≤ 2.54 mm in diameter) to the wire feeder portion of an electron beam gun. The wire may be of the compositions, described above. The electron beam (EB) heats the wire above the liquidus point of the body to be formed, followed by rapid solidification (e.g., at least 100°C per second) of the molten pool to form the deposited material. The wire could be fabricated by a conventional ingot process or by a powder consolidation process. These steps may be repeated as necessary until the final product is produced. Plasma arc wire feed may similarly be used with the alloys disclosed herein. In one embodiment, not illustrated, an electron beam (EB) or plasma arc additive manufacturing apparatus may employ multiple different wires with corresponding multiple different radiation sources, each of the wires and sources being fed and activated, as appropriate to provide the product having a metal matrix having the alloying elements and any optional incidental elements.

In another approach, a method may comprise (a) selectively spraying one or more metal powders towards or on a building substrate, (b) heating, via a radiation source, the metal powders, and optionally the building substrate, above the liquidus temperature of the product to be formed, thereby forming a molten pool, (c) cooling the molten pool, thereby forming a solid portion of the metal product, wherein the cooling comprises cooling at a cooling rate of at least 100°C per second. In one embodiment, the cooling rate is at least 1000°C per second. In another embodiment, the cooling rate is at least 10,000°C per second. The cooling step (c) may be accomplished by moving the radiation source away from the molten pool and/or by moving the building substrate having the molten pool away from the radiation source. Steps (a)-(c) may be repeated as necessary until the metal product is completed. The spraying step (a) may be accomplished via one or more nozzles, and the composition of the metal powders can be varied, as appropriate, to provide tailored final metal products having a metal matrix, the metal matrix having the alloying elements and any optional incidental elements. The composition of the metal powder being heated at any one time can be varied in real-time by using different powders in different nozzles and/or by varying the powder composition(s) provided to any one nozzle in real-time. The work piece can be any suitable substrate. In one embodiment, the building substrate is, itself, a metal product (e.g., an alloy product.)

As noted above, welding may be used to produce metal products (e.g., to produce alloy products). In one embodiment, the product is produced by a melting operation applied to pre-cursor materials in the form of a plurality of metal components of different composition. The pre-cursor materials may be presented in juxtaposition relative to one another to allow simultaneous melting and mixing. In one example, the melting occurs in the course of electric arc welding. In another example, the melting may be conducted by a laser or an electron beam during additive manufacturing. The melting operation results in the plurality of metal components mixing in a molten state and forming the metal product, such as in the form of an alloy. The pre-cursor materials may be provided in the form of a plurality of physically separate forms, such as a plurality of elongated strands or fibers of metals or metal alloys of different composition or an elongated strand or a tube of a first composition and an adjacent powder of a second composition, e.g., contained within the tube or a strand having one or more clad layers. The pre-cursor materials may be formed into a structure, e.g., a twisted or braided cable or wire having multiple strands or fibers or a tube with an outer shell and a powder contained in the lumen thereof. The structure may then be handled to subject a portion thereof, e.g., a tip, to the melting operation, e.g., by using it as a welding electrode or as a feed stock for additive manufacturing. When so used, the structure and its component pre-cursor materials may be melted, e.g., in a continuous or discrete process to form a weld bead or a line or dots of material deposited for additive manufacture.

In one embodiment, the metal product is a weld body or filler interposed between and joined to a material or material to the weld, e.g., two bodies of the same or different material or a body of a single material with an aperture that the filler at least partially fills. In another embodiment, the filler exhibits a transition zone of changing composition relative to the material to which it is welded, such that the resultant combination could be considered the alloy product.

### New materials consisting essentially of a bcc solid solution structure

While the above disclosure generally describes how to produce new bcc materials having precipitate phase(s) therein, it is also possible to produce a material consisting essentially of a bcc solid solution structure. For instance, after production of an ingot, a wrought body, a shape casting, or an additively manufactured body, as described above, the material may be homogenized, such as in a manner described relative to the dissolving step (20), above. With appropriate rapid cooling, precipitation of any second phase particles may be inhibited / restricted, thereby realizing a bcc solid solution material essentially free of any second phase particles, i.e., a material consisting essentially of a bcc solid solution structure.

### Alloy Properties

The new materials may realize an improved combination of properties. In this section all mechanical properties are measured in the longitudinal (L) direction, unless otherwise specified.

In one approach, a new material realizes an as-cast tensile yield strength (TYS) of at least 715 MPa when tested in accordance with ASTM E8 at room temperature (RT). In one embodiment, a new material may realize an as-cast, RT TYS of at least 735 MPa. In another embodiment, a new material may realize an as-cast, RT TYS of at least 755 MPa. In yet another embodiment, a new material may realize an as-cast, RT TYS of at least 775 MPa. In another embodiment, a new material may realize an as-cast, RT TYS of at least 795 MPa. In yet another embodiment, a new material may realize an as-cast, RT TYS of at least 815 MPa. In another embodiment, a new material may realize an as-cast, RT TYS of at least 835 MPa. In yet another embodiment, a new material may realize an as-cast, RT TYS of at least 855 MPa. In another embodiment, a new material may realize an as-cast, RT TYS of at least 875 MPa. In yet another embodiment, a new material may realize an as-cast, RT TYS of at least 895 MPa. In another embodiment, a new material may realize an as-cast, RT TYS of at least 915 MPa. In yet another embodiment, a new material may realize an as-cast, RT TYS of at least 935 MPa. In another embodiment, a new material may realize an as-cast, RT TYS of at least 940 MPa. Higher strengths may be realized when chromium is employed. In any of these embodiments, a new material may realize an as-cast, RT elongation of at least 2.0 %. In any of these embodiments, a new material may realize an as-cast, RT elongation of at least 4.0 %. In any of these embodiments, a new material may realize an as-cast, RT elongation of at least 6.0 %. In any of these embodiments, a new material may realize an as-cast, RT elongation of at least 8.0 %. In any of these embodiments, a new material may realize an as-cast, RT elongation of at least 9.0 %.

In one approach, a new material may realize an as-cast ultimate tensile strength (UTS) of at least 880 MPa when tested in accordance with ASTM E8 at room temperature (RT). In one embodiment, a new material may realize an as-cast, RT UTS of at least 890 MPa. In another embodiment, a new material may realize an as-cast, RT UTS of at least 900 MPa. In yet another embodiment, a new material may realize an as-cast, RT UTS of at least 910 MPa. In another embodiment, a new material may realize an as-cast, RT UTS of at least 920 MPa. In yet another embodiment, a new material may realize an as-cast, RT UTS of at least 930 MPa. In another embodiment, a new material may realize an as-cast, RT UTS of at least 940 MPa. In yet another embodiment, a new material may realize an as-cast, RT UTS of at least 950 MPa. In another embodiment, a new material may realize an as-cast, RT UTS of at least 960 MPa. In yet another embodiment, a new material may realize an as-cast, RT UTS of at least 970 MPa. In another embodiment, a new material may realize an as-cast, RT UTS of at least 980 MPa. In any of these embodiments, a new material may realize an as-cast, RT elongation of at least 2.0 %. In any of these embodiments, a new material may realize an as-cast, RT elongation of at least 4.0 %. In any of these embodiments, a new material may realize an as-cast, RT elongation of at least 6.0 %. In any of these embodiments, a new material may realize an as-cast, RT elongation of at least 8.0 %. In any of these embodiments, a new material may realize an as-cast, RT elongation of at least 9.0 %.

In one approach, a new material may realize a TYS of at least 1100 MPa in the heat treated condition, when tested in accordance with ASTM E8 at room temperature. In one embodiment, a new material may realize a heat treated, RT TYS of at least 1150 MPa. In another embodiment, a new material may realize a heat treated, RT TYS of at least 1200 MPa. In yet another embodiment, a new material may realize a heat treated, RT TYS of at least 1250 MPa. In another embodiment, a new material may realize a heat treated, RT TYS of at least 1300 MPa. In yet another embodiment, a new material may realize a heat treated, RT TYS of at least 1350 MPa. In another embodiment, a new material may realize a heat treated, RT TYS of at least 1400 MPa. In yet another embodiment, a new material may realize a heat treated, RT TYS of at least 1450 MPa. In another embodiment, a new material may realize a heat treated, RT TYS of at least 1500 MPa. In any of these embodiments, a new material may realize a heat treated, RT elongation of at least 1.0 %. In any of these embodiments, a new material may realize a heat treated, RT elongation of at least 2.0 %. In any of these embodiments, a new material may realize a heat treated, RT elongation of at least 3.0 %. In any of these embodiments, a new material may realize a heat treated, RT elongation of at least 4.0 %. In any of these embodiments, a new material may realize a heat treated, RT elongation of at least 5.0 %.

In one approach, a new material may realize a UTS of at least 1100 MPa in the heat treated condition, when tested in accordance with ASTM E8 at room temperature. In one embodiment, a new material may realize a heat treated, RT UTS of at least 1150 MPa. In another embodiment, a new material may realize a heat treated, RT UTS of at least 1200 MPa. In yet another embodiment, a new material may realize a heat treated, RT UTS of at least 1250 MPa. In another embodiment, a new material may realize a heat treated, RT UTS of at least 1300 MPa. In yet another embodiment, a new material may realize a heat treated, RT UTS of at least 1350 MPa. In another embodiment, a new material may realize a heat treated, RT UTS of at least 1400 MPa. In yet another embodiment, a new material may realize a heat treated, RT UTS of at least 1450 MPa. In yet another embodiment, a new material may realize a heat treated, RT UTS of at least 1500 MPa. In any of these embodiments, a new material may realize a heat treated, RT elongation of at least 1.0 %. In any of these embodiments, a new material may realize a heat treated, RT elongation of at least 2.0 %. In any of these embodiments, a new material may realize a heat treated, RT elongation of at least 3.0 %. In any of these embodiments, a new material may realize a heat treated, RT elongation of at least 4.0 %. In any of these embodiments, a new material may realize a heat treated, RT elongation of at least 5.0 %.

In one approach, the new materials may realize improved properties over a Ti-6Al-4V alloy of the same product form and heat treated condition when tested in accordance with ASTM E8 at room temperature. In one embodiment, the new materials may realize at least 5.0% higher room temperature TYS as compared to a Ti-6Al-4V product of the same product form and heat treated condition. In one embodiment, the new materials may realize at least 10% higher RT TYS as compared to a Ti-6Al-4V product of the same product form and heat treated condition. In one embodiment, the new materials may realize at least 20% higher RT TYS as compared to a Ti-6Al-4V product of the same product form and heat treated condition. In one embodiment, the new materials may realize at least 25% higher RT TYS as compared to a Ti-6Al-4V product of the same product form and heat treated condition. In one embodiment, the new materials may realize at least 30% higher RT TYS as compared to a Ti-6Al-4V product of the same product form and heat treated condition. In one embodiment, the new materials may realize at least 35% higher RT TYS as compared to a Ti-6Al-4V product of the same product form and heat treated condition. Similar results may be realized for ultimate tensile strength.

In one approach, the new materials may realize improved properties over a Ti-6Al-4V alloy of the same product form and heat treated condition when tested in accordance with ASTM E21 at 650°C. In one embodiment, the new materials may realize at least 1.0% higher TYS as compared to a Ti-6Al-4V product of the same product form and heat treated condition at 650°C. In one embodiment, the new materials may realize at least 2.0% higher TYS as compared to a Ti-6Al-4V product of the same product form and heat treated condition at 650°C. In one embodiment, the new materials may realize at least 3.0% higher TYS as compared to a Ti-6Al-4V product of the same product form and heat treated condition at 650°C. In one embodiment, the new materials may realize at least 4.0% higher TYS as compared to a Ti-6Al-4V product of the same product form and heat treated condition at 650°C. In one embodiment, the new materials may realize at least 5.0% higher TYS as compared to a Ti-6Al-4V product of the same product form and heat treated condition at 650°C. In any of these embodiments, the new materials may realize the higher TYS at equivalent elongation. Similar results may be realized for ultimate tensile strength.

### BRIEF DESCRIPTION OF THE DRAWINGS

FIG. 1 is a schematic illustration of bcc, fcc, and hcp unit cells.
FIG. 2a is a graph showing the effect of Al content on the equilibrium phase fields of a Ti-3Mo-6Nb-6V-XAl alloy.
FIG. 2b is a graph showing the effect of V content on the equilibrium phase fields of a Ti-6Al-3Mo-6Nb-XV alloy.
FIG. 2c is a graph showing the effect of V content on the equilibrium phase field of Ti-6Al-3Mo-6V-XNb
FIG. 2d is a graph showing the effect of Mo content on the equilibrium phase fields of a Ti-6Al-6V-6Nb-XMo alloy.
FIG. 2e is a graph showing the effect of Cr content on the equilibrium phase fields of a Ti-6Al-6V-6Nb-3Mo-XCr alloy.
FIG. 3 is a flow chart of one embodiment of a method to produce a new material
FIG. 4 is a flow chart of one embodiment of a method to obtain a wrought product having a bcc solid solution structure with one of more precipitates therein.

### DETAILED DESCRIPTION

### Example 1: Testing of Invention and Conventional Alloys

Two invention alloys (Ti-6Al-3Mo-6Nb-6V, and Ti-6Al-3Mo-6Nb-6V-4Cr), and a conventional Ti-6Al-4V alloy were cast via arc melt casting into rods. After casting, mechanical properties of the as-cast alloys were measured in accordance with ASTM E8, the results of which are shown in Tables 3-5. Specimens of the Ti-6Al-3Mo-6Nb-6V and Ti-6Al-3Mo-6Nb-6V-4Cr alloys were heat treated at 500°C for 8 hours and then air cooled. The mechanical properties of the heat treated alloys were then tested, the results of which are shown in Table 4, below. All reported strength and elongation properties were from testing in the longitudinal (L) direction. Estimated toughness from the stress-strain curve produced during the mechanical property testing is also shown. Tensile properties at 650°C were also tested for the Ti-6Al-3Mo-6Nb-6V-4Cr alloy and are also provided in the Table 5, below.

**Table 3 - Conventional Ti-6Al-4V Properties**

| **Condition** | **TYS (MPa)** | **UTS (MPa)** | **Elong. (%)** |
|---|---|---|---|
| **RT As-Cast** | 715 | 881 | 11 |
| **As-Cast, Elevated Temp.** | 229 | 366 | 16 |

**Table 4 - Ti-6Al-3Mo-6Nb-6V Properties**

| **Condition** | **TYS (MPa)** | **UTS (MPa)** | **Elong. (%)** |
|---|---|---|---|
| **As-Cast** | 789 | 979 | 8 |
| **Heat Treated** | N/A | 937 | N/A |

**Table 5 - Ti-6Al-3Mo-6Nb-6V-4Cr Properties**

| **Condition** | **TYS (MPa)** | **UTS (MPa)** | **Elong. (%)** |
|---|---|---|---|
| **As-Cast** | 941 | 942 | - |
| **Heat Treated** | 1480 | 1488 | - |
| **As-Cast, Elevated Temp.** | 238 | 417 | 16 |
| **Heat Treated, Elevated Temp.** | 234 | 415 | 16 |

As shown, the new invention alloys realized improved properties as compared to the conventional alloy.

## Claims

1. A titanium alloy consisting of:
4 - 8 wt. % Al;
4 - 8 wt. % Nb;
4 - 8 wt. % V;
1 - 5 wt. % Mo; and
optionally 2-6 wt. % Cr;
the balance being Ti, optional incidental elements, and unavoidable impurities, wherein the optional incidental elements are:
up to 1.0 wt. % Si;
up to 2.0 wt. % Fe;
up to 1.0 wt. % Y;
up to 1.0 wt. % Er;
up to 0.5 wt. % C;
up to 0.5 wt. % O;
up to 0.5 wt. % B,
wherein the titanium alloy comprises a bcc crystalline structure.

2. The titanium alloy of claim 1, wherein the titanium alloy includes a sufficient amount of the Ti, the Al, the Nb, the V, the Mo, and the optional Cr to realize a beta transus temperature of not greater than 850°C.

3. The titanium alloy of any of the preceding claims, wherein the alloy includes at least 4.5 wt. % Al, or at least 5.0 wt. % Al.

4. The titanium alloy of any of the preceding claims, wherein the alloy includes not greater than 7.5 wt. % Al, or not greater than 7.0 wt. % Al.

5. The titanium alloy of any of the preceding claims, wherein the alloy includes at least 4.5 wt. % Nb, or at least 5.0 wt. % Nb.

6. The titanium alloy of any of the preceding claims, wherein the alloy includes not greater than 7.5 wt. % Nb, or not greater than 7.0 wt. % Nb.

7. The titanium alloy of any of the preceding claims, wherein the alloy includes at least 4.5 wt. % V, or at least 5.0 wt. % V.

8. The titanium alloy of any of the preceding claims, wherein the alloy includes not greater than 7.5 wt. % V, or not greater than 7.0 wt. % V.

9. The titanium alloy of any of the preceding claims, wherein the alloy includes at least 1.5 wt. % Mo, or at least 2.0 wt. % Mo.

10. The titanium alloy of any of the preceding claims, wherein the alloy includes not greater than 4.5 wt. % Mo, or not greater than 4.0 wt. % Mo.

11. The titanium alloy of any of the preceding claims, wherein the alloy includes at least 2.5 wt. % Cr, or at least 3.0 wt. % Cr.

12. The titanium alloy of any of the preceding claims, wherein the alloy includes not greater than 5.5 wt. % Cr, or not greater than 5.0 wt. % Cr.

13. A method comprising:
(a) using a feedstock in an additive manufacturing apparatus, wherein the feedstock comprises the titanium alloy of any of claims 1-12;
(b) producing a metal product in the additive manufacturing apparatus using the feedstock.

14. The method of claim 13, wherein the producing step comprises:
heating the feedstock above its liquidus temperature, thereby forming a molten pool from the feedstock; and
cooling the molten pool, thereby forming a portion of the metal product, wherein the cooling comprises cooling at a cooling rate of at least 1000°C per second,
wherein, due to the producing step, the metal product comprises at least one precipitate phase, wherein the at least one precipitate phase comprises Ti₃Al, and wherein the metal product comprises at least 0.5 vol. % of the precipitate phase.

15. The method of claim 13, comprising:
working the metal product, wherein the working comprises one or more of rolling, forging, extruding and hot isostatic pressing.

## Patentansprüche

1. Titanlegierung, bestehend aus:
4 - 8 Gew.-% Al;
4 - 8 Gew.-% Nb;
4 - 8 Gew.-% V;
1 - 5 Gew.-% Mo; und
optional 2 - 6 Gew.-% Cr;
wobei der Rest Ti, optionale zufällige Elemente und unvermeidbare Verunreinigungen sind, wobei die optionalen zufälligen Elemente die Folgenden sind:
bis zu 1,0 Gew.-% Si;
bis zu 2,0 Gew.-% Fe;
bis zu 1,0 Gew.-% Y;
bis zu 1,0 Gew.-% Er;
bis zu 0,5 Gew.-% C;
bis zu 0,5 Gew.-% O;
bis zu 0,5 Gew.-% B,
wobei die Titanlegierung eine bcc(*body centered cubic,* kubisch raumzentrierte)-Kristallstruktur umfasst.

2. Titanlegierung nach Anspruch 1, wobei die Titanlegierung eine ausreichende Menge des Ti, des Al, des Nb, des V, des Mo und des optionalen Cr beinhaltet, um eine Beta-Transus-Temperatur von nicht mehr als 850 °C zu erzielen.

3. Titanlegierung nach einem der vorhergehenden Ansprüche, wobei die Legierung mindestens 4,5 Gew.-% Al oder mindestens 5,0 Gew.-% Al beinhaltet.

4. Titanlegierung nach einem der vorhergehenden Ansprüche, wobei die Legierung nicht mehr als 7,5 Gew.-% Al oder nicht mehr als 7,0 Gew.-% Al beinhaltet.

5. Titanlegierung nach einem der vorhergehenden Ansprüche, wobei die Legierung mindestens 4,5 Gew.-% Nb oder mindestens 5,0 Gew.-% Nb beinhaltet.

6. Titanlegierung nach einem der vorhergehenden Ansprüche, wobei die Legierung nicht mehr als 7,5 Gew.-% Nb oder nicht mehr als 7,0 Gew.-% Nb beinhaltet.

7. Titanlegierung nach einem der vorhergehenden Ansprüche, wobei die Legierung mindestens 4,5 Gew.-% V oder mindestens 5,0 Gew.-% V beinhaltet.

8. Titanlegierung nach einem der vorhergehenden Ansprüche, wobei die Legierung nicht mehr als 7,5 Gew.-% V oder nicht mehr als 7,0 Gew.-% V beinhaltet.

9. Titanlegierung nach einem der vorhergehenden Ansprüche, wobei die Legierung mindestens 1,5 Gew.-% Mo oder mindestens 2,0 Gew.-% Mo beinhaltet.

10. Titanlegierung nach einem der vorhergehenden Ansprüche, wobei die Legierung nicht mehr als 4,5 Gew.-% Mo oder nicht mehr als 4,0 Gew.-% Mo beinhaltet.

11. Titanlegierung nach einem der vorhergehenden Ansprüche, wobei die Legierung mindestens 2,5 Gew.-% Cr oder mindestens 3,0 Gew.-% Cr beinhaltet.

12. Titanlegierung nach einem der vorhergehenden Ansprüche, wobei die Legierung nicht mehr als 5,5 Gew.-% Cr oder nicht mehr als 5,0 Gew.-% Cr beinhaltet.

13. Verfahren, umfassend:
(a) Verwenden eines Ausgangsmaterials in einem additiven Fertigungsapparat, wobei das Ausgangsmaterial die Titanlegierung nach einem der Ansprüche 1 bis 12 umfasst;
(b) Herstellen eines Metallproduktes im additiven Fertigungsapparat unter Verwendung des Ausgangsmaterials.

14. Verfahren nach Anspruch 13, wobei der Schritt des Herstellens Folgendes umfasst:
Erhitzen des Ausgangsmaterials über seine Liquidus-Temperatur, wodurch ein Schmelzbad aus dem Ausgangsmaterial gebildet wird; und
Kühlen des Schmelzbades, wodurch ein Abschnitt des Metallproduktes gebildet wird, wobei das Kühlen das Kühlen mit einer Kühlrate von mindestens 1.000 °C pro Sekunde umfasst, wobei das Metallprodukt aufgrund des Schrittes des Herstellens mindestens eine Fällungsphase umfasst, wobei die mindestens eine Fällungsphase Ti₃Al umfasst und wobei das Metallprodukt mindestens 0,5 Vol.-% der Fällungsphase umfasst.

15. Verfahren nach Anspruch 13, Folgendes umfassend:
Bearbeiten des Metallprodukts, wobei das Bearbeiten Walzen, Schmieden, Strangpressen und/oder isostatisches Heißpressen umfasst.

## Revendications

1. Alliage de titane constitué de :
4 à 8 % en poids d'Al;
4 à 8 % en poids de Nb ;
4 à 8 % en poids de V ;
1 à 5 % en poids de Mo ; et
facultativement 2 à 6 % en poids de Cr ;
le complément étant du Ti, des éléments auxiliaires facultatifs et des impuretés inévitables,
les éléments auxiliaires facultatifs étant :
jusqu'à 1,0 % en poids de Si ;
jusqu'à 2,0 % en poids de Fe ;
jusqu'à 1,0 % en poids de Y ;
jusqu'à 1,0 % en poids de Er ;
jusqu'à 0,5 % en poids de C ;
jusqu'à 0,5 % en poids de O ;
jusqu'à 0,5 % en poids de B,
dans lequel l'alliage de titane comprend une structure cristalline bcc.

2. Alliage de titane selon la revendication 1, dans lequel l'alliage de titane comporte une quantité suffisante de Ti, d'Al, de Nb, de V, de Mo et de Cr facultatif pour réaliser une température de transus bêta non supérieure à 850 °C.

3. Alliage de titane selon l'une quelconque des revendications précédentes, dans lequel l'alliage comporte au moins 4,5 % en poids d'Al, ou au moins 5,0 % en poids d'Al.

4. Alliage de titane selon l'une quelconque des revendications précédentes, dans lequel l'alliage ne comporte pas plus de 7,5 % en poids d'Al, ou pas plus de 7,0 % en poids d'Al.

5. Alliage de titane selon l'une quelconque des revendications précédentes, dans lequel l'alliage comporte au moins 4,5 % en poids de Nb ou au moins 5,0 % en poids de Nb.

6. Alliage de titane selon l'une quelconque des revendications précédentes, dans lequel l'alliage ne comporte pas plus de 7,5 % en poids de Nb ou pas plus de 7,0 % en poids de Nb.

7. Alliage de titane selon l'une quelconque des revendications précédentes, dans lequel l'alliage comporte au moins 4,5 % en poids de V, ou au moins 5,0 % en poids de V.

8. Alliage de titane selon l'une quelconque des revendications précédentes, dans lequel l'alliage ne comporte pas plus de 7,5 % en poids de V, ou pas plus de 7,0 % en poids de V.

9. Alliage de titane selon l'une quelconque des revendications précédentes, dans lequel l'alliage comporte au moins 1,5 % en poids de Mo, ou au moins 2,0 % en poids de Mo.

10. Alliage de titane selon l'une quelconque des revendications précédentes, dans lequel l'alliage ne comporte pas plus de 4,5 % en poids de Mo ou pas plus de 4,0 % en poids de Mo.

11. Alliage de titane selon l'une quelconque des revendications précédentes, dans lequel l'alliage comporte au moins 2,5 % en poids de Cr, ou au moins 3,0 % en poids de Cr.

12. Alliage de titane selon l'une quelconque des revendications précédentes, dans lequel l'alliage ne comporte pas plus de 5,5 % en poids de Cr, ou pas plus de 5,0 % en poids de Cr.

13. Procédé comprenant :
(a) l'utilisation d'une charge d'alimentation dans un appareil de fabrication d'additifs, la charge d'alimentation comprenant l'alliage de titane selon l'une quelconque des revendications 1 à 12 ;
(b) la production d'un produit métallique dans l'appareil de fabrication d'additifs à l'aide de la charge d'alimentation.

14. Procédé selon la revendication 13, dans lequel l'étape de production comprend :
le chauffage de la charge d'alimentation au-dessus de sa température de liquidus, formant ainsi un bain de fusion à partir de la charge d'alimentation ; et
le refroidissement du bain de fusion, formant ainsi une portion du produit métallique, le refroidissement comprenant un refroidissement à une vitesse de refroidissement d'au moins 1 000 °C par seconde, dans lequel, en raison de l'étape de production, le produit métallique comprend au moins une phase de précipité, dans lequel l'au moins une phase de précipité comprend du Ti₃Al, et dans lequel le produit métallique comprend au moins 0,5 % en volume de la phase de précipité.

15. Procédé selon la revendication 13, comprenant :
le travail du produit métallique, le travail comprenant le laminage, et/ou le forgeage, et/ou l'extrusion et/ou le pressage isostatique à chaud.
